Europäisches Patentamt

European Patent Office

Office européen des brevets

(11) Veröffentlichungsnummer : **0 397 600 B1**

(12) # EUROPÄISCHE PATENTSCHRIFT

(45) Veröffentlichungstag der Patentschrift :
**21.10.92 Patentblatt 92/43**

(51) Int. Cl.$^5$ : **G01T 7/02, G01T 1/204**

(21) Anmeldenummer : **90810337.7**

(22) Anmeldetag : **03.05.90**

(54) **Verfahren zur Messung der Radioaktivität von Proben sowie Vorrichtung zur Durchführung des Verfahrens.**

(30) Priorität : **11.05.89 CH 1781/89**

(43) Veröffentlichungstag der Anmeldung :
**14.11.90 Patentblatt 90/46**

(45) Bekanntmachung des Hinweises auf die
Patenterteilung :
**21.10.92 Patentblatt 92/43**

(84) Benannte Vertragsstaaten :
**AT BE CH DE DK FR GB IT LI NL SE**

(56) Entgegenhaltungen :
**EP-A- 0 126 564**
**FR-A- 2 308 101**
**GB-A- 2 167 279**
**US-A- 3 924 128**

(73) Patentinhaber : **CIBA-GEIGY AG**
**Klybeckstrasse 141**
**CH-4002 Basel (CH)**

(72) Erfinder : **Joss, Urs. Dr.**
**Rotbergerstrasse 29**
**CH-4054 Basel (CH)**

**Beschreibung**

Die Erfindung betrifft ein Verfahren zur Messung der Radioaktivität von Proben, die in den Gefäßchen einer Mikrotiterplatte angeordnet sind und in denen die Radioaktivität festkörpergebunden, zum Beispiel zellgebunden ist oder in Form eines Protein-Präzipitats vorliegt, wobei in Flüssigkeiten suspendierte, gelöste oder gemischte Proben zunächst von den Flüssigkeiten getrennt werden, und ihr Flüssigkeitsüberstand abgesaugt wird. Die Erfindung betrifft auch eine Vorrichtung, insbesondere zur Durchführung des eingangs erwähnten Verfahrens.

Seit einigen Jahren werden für die verschiedensten medizinisch-biochemischen Testverfahren, wie beispielsweise dem Radimmuno-Assay, dem Radio-Rezeptor-Assay sowie dem Rezeptorscreening zur Identifikation neuer Wirksubstanzen, zunehmend sogenannte Mikrotiterplatten verwendet. Solche Mikrotiterplatten bestehen gewöhnlich aus einer Vielzahl von in Reihen und Zeilen zueinander angeordneten Gefäßchen, die im Bereich ihrer Öffnungen miteinander verbunden sind.

Häufig wird bei derartigen Testverfahren festkörpergebundene Radioaktivität, die zum Beispiel zellgebunden ist oder in Form eines Protein-Präzipitats vorliegt, gemessen. Dazu werden in Flüssigkeiten suspendierte, gelöste oder gemischte Proben zunächst beispielsweise zentrifugiert oder durch magnetische Trennverfahren von den Flüssigkeiten getrennt, und ihr Flüssigkeitsüberstand abgesaugt, um anschliessend die die Proben beinhaltenden Gefäßchen der entsprechenden Mikrotiterplatte mit einem heißen Draht oder einem speziellen Schneidgerät zu vereinzeln. Ein solches Testverfahren ist jedoch mit einem erheblichen Aufwand verbunden, da jedes dieser vereinzelten Gefäßchen einer Mikrotiterplatte getrennt behandelt und gemessen wird.

Man hat daher bereits auch schon ein Testverfahren geschaffen, bei dem die in den Gefäßchen einer Mikrotiterplatte befindliche Festkörpersuspension über Filter abgesaugt und anschließend die Radioaktivität der an das Filter gebundenen Festkörper gemessen wird. Dieses Testverfahren ist weitgehend automatisiert worden, stößt aber an Grenzen. So wird häufig auch die nicht-festkörpergebundene Radioaktivität vom Filter festgehalten, was zu einem hohen Background und entsprechend ungenauen Resultaten führt.

Darüber hinaus besteht bei kleineren Volumina von weniger als 100 Mikrolitern die Gefahr, daß Radioaktivität in einem die zulässigen Toleranzen übersteigenden Ausmaß im Absaugsystem festgehalten wird. Kleine Volumina von beispielsweise höchstens 40 Mikrolitern haben jedoch den Vorteil, daß dabei insbesondere der Gebrauch von Radioaktivität vermindert und die damit verbundenen Entsorgungsprobleme reduziert werden können.

In der FR-A-2,308,101 (US-A-4,065,383) wird vorgeschlagen, eine Radioaktivität enthaltende Flüssigkeit mit einem saugfähigen Stäbchen aus dem Gefässchen aufzusaugen. Das Stäbchen wird daraufhin in einen Szintillationszähler gegeben und bezüglich seiner Aktivität ausgemessen. Diese Methode ist relativ umständlich und birgt viele Möglichkeiten der Kontamination in sich, beispielsweise kann radioaktive Substanz von dem Stäbchen abtropfen und den Arbeitsplatz unkontrolliert kontaminieren.

In der GB-A-2,167,279 ist ein rasterförmig angeordnetes Röntgenstrahlen-Detektorfeld beschrieben, wie es beispielsweise in der Prüfung von Schweißnähten verwendet wird. Für die Ausmessung von in Mikrotiterplatten gebundener Radioaktivität ist seine Empfindlichkeit jedoch zu gering.

Schliesslich ist in der EP-A-126,564 (US-A-4,752,557) ein Speicherelement für Strahlung beschrieben. Es weist eine Vielzahl von rasterartig angeordneten Zellen auf, welche mit einer phosphoreszierfähigen Leuchtstoffschicht gefüllt sink. Für eine quantitative Bestimmung der Aktivität von in den einzelnen Gefässchen von Mikrotiterplatten enthaltenen Proben ist die Vorrichtung jedoch nicht geeignet.

Eine quantitative in-situ-Messung der Radioaktivität von in den Gefäßchen an einer Mikrotiterplatte befindlichen Proben aber war bislang kaum möglich, da die emittierte Elektronenstrahlung nur eine sehr geringe Reichweite hat und die Meßvorrichtung, zum Beispiel ein ortsabhängiges Proportionalzählrohr nach Berthold, aufgrund der Tiefe der Gefäßchen nicht nahe genug an die Proben herangebracht werden konnte.

Es besteht daher die Aufgabe, ein mit vergleichsweise wenig Aufwand verbundenes Verfahren zur Messung der Radioaktivität von in den Gefäßchen einer Mikrotiterplatte befindlichen Proben zu schaffen, mit dem auch Proben kleinen Volumens mit möglichst geringer Meßwertungenauigkeit gemessen werden können.

Es besteht auch die Aufgabe, eine einfache Vorrichtung insbesondere zur Durchführung des erfindungsgemäßen Verfahrens zu schaffen.

Die Lösung besteht in einem Verfahren gemäß Anspruch 1. Hierbei werden die Böden der Gefäßchen der Mikrotiterplatte miteinander verbunden und dann von der Mikrotiterplatte oder den Gefäßchen-Wandungen derart abgetrennt, daß sie verbunden bleiben, und anschließend die von ihnen getragenen Proben nacheinander, in Gruppen oder gleichzeitig im gesamten Raster, gemessen. Da die Böden der Gefäßchen vor dem Abtrennen von der Mikrotiterplatte zunächst miteinander verbunden werden, bleiben ihre ursprünglichen Abstände sowie ihre Ordnung zueinander erhalten. Die miteinander verbundenen Gefäßchen-Böden sind auch nach dem Abtrennen von der restlichen Mikrotiterplatte in ihrem ursprünglichen Verbund handhabbar, was den geringen Aufwand bei dem erfindungsgemäßen Verfahren begünstigt. Die von den Gefäßchen-Böden getragenen Proben müssen nicht einzeln -, sondern können vielmehr leicht auch in Gruppen oder im gesamten Raster gleichzeitig gemessen werden. Das Meßgerät kann nun aber erheblich näher an die einzelnen Proben herangeführt werden, so daß sich genauere Werte und, trotz der Nähe der Meßstellen zueinander, keine gegeneitigen Verfälschungen ergeben. Eine besonders vorteilhafte Weiterbildung des erfindungsgemäßen Verfahrens, dem auch eigene schutzwürdige Bedeutung zukommen kann, sieht vor, daß die miteinander verbundenen Gefäßchen-Böden der Mikrotiterplatte nach dem Abtrennen derart verformt werden, daß an ihnen aufgrund ihrer Wölbung oder seitlichen Begrenzung aufwärts weisende Wandteile oder dergleichen Bereiche umgestülpt und/oder niedergedrückt werden. Durch das Verformen der die Böden überragenden Wandteile der Gefäßchen kann die auf dem Gefäßchen-Boden befindliche Probe bis auf Berührungsdistanz an die Meßvorrichtung herangebracht werden, was zu einer noch höheren Empfindlichkeit und Ortsauflösung auch bei kleinem Volumen der einzelnen Probe führt.

Nach einem weiteren Vorschlag gemäß der Erfindung werden die Gefäßchen-Böden an ihren aufwärtsweisenden Wandteilen oder dergleichen Bereichen bis zum Verformen erwärmt und gegebenenfalls niedergedrückt. Durch das Erwärmen der aufwärtsweisenden Wandteile oder dergleichen können diese, evtl. auch bei dickeren Materialstärken der Mikrotiterplatte, leicht verformt und niedergedrückt werden, so daß die einzelnen Proben für die Meßvorrichtung beispielsweise mit geringem Abstand zugänglich werden.

Die erfindungsgemäße Vorrichtung ist im Anspruch 6 definiert. Sie weist erfindungsgemäße eine mit aufwärtsgerichteten Noppen versehene Unterlage für die Gefäßchen-Böden auf, wobei die Noppen im Rasterabstand der Gefäßchen einer Mikrotiterplatte und ihrer Gefäßchen-Böden angeordnet sind. Weiter ist ein Preßstempel vorgesehen , der im Bereich der Noppen der Unterlage Einbuchtungen, Ausnehmungen, Lochungen oder dergleichen Vertiefungen und daneben die aufwärtsgerichteten Ränder der noch nicht umgestülpten Gefäßchen-Böden beaufschlagende Ringbereiche oder Druckbereiche hat. Die auch nach dem Abtrennen von der übrigen Mikrotiterplatte im ursprünglichen Verbund handhabbaren Gefäßchen-Böden können derart auf der mit Noppen versehenen Unterlage durch Herabsenken. des Preßstempels aufgrund ihrer Wölbung oder an ihren aufwärts weisenden Wandteilen oder dergleichen Bereichen der Gefäßchen-Böden umgestülpt und-/oder niedergedrückt werden. Dabei verhindern die Lochungen oder dergleichen Vertiefungen des Preßstempels, daß mit dem Niederdrücken der Wandteile oder dergleichen auch die jeweils auf den Gefäßchen-Böden befindliche Probe übermäßig druckbeaufschlagt wird.

Dabei sieht eine einfache und vorteilhafte Ausführung gemäß der Erfindung vor, daß die mit den aufwärtsgerichteten Noppen versehene Unterlage als Platte, Folie oder dergleichen ausgebildet ist und zum Verbinden der Gefäßchen-Böden vor dem Abtrennen der Böden dient und mit den Noppen an den Unterseiten der Böden fixierbar, insbesondere verklebbar oder verschweißbar ist.

Ein anderer Vorschlag gemäß der Erfindung sieht vor, daß zum Verbinden der Böden der Gefäßchen einer Mikrotiterplatte eine durchgehend glatte, flexible Folie oder Platte dient und die mit Noppen versehene Unterlage als separates Widerlager für den Preßstempel ausgebildet ist.

Dabei kann es auch vorteilhaft sein, wenn die Verbindungsfolie für die Gefäßchen-Böden mit diesen vorgefertigt verbunden ist. Bei einer solchen Ausführung müssen die die Verbindungsfolie der Mikrotiterplatte überragenden, aufwärts gerichteten Wandungsbereiche der Gefäßchen lediglich abgetrennt werden, um die Proben an die Meßvorrichtung heranführen zu können. Dabei sein die über die Verbindungsfolie miteinander verbundenen Gefäßchen-Böden auch nach dem Abtrennen der übrigen Wandungsbereiche der Gefäßchen in ihrem ursprünglichen Verbund handhabbar.

Weiterbildungen der Erfindung sind in weiteren Unteransprüchen aufgeführt. Nachstehend wird diese anhand vorteilhafter Ausführungsbeispiele in Verbindung mit den Figuren noch näher erläutert.

Es zeigt:

Fig. 1 eine Mikrotiterplatte in einer perspektivischen und teilweise aufgebrochenen Darstellung, die in Reihen und Zeilen angeordnete Gefäßchen hat, wobei die Böden dieser Gefäßchen über eine flexible Platte miteinander verbunden sind,

Fig. 2 die Mikrotiterplatte aus Fig. 1 in einem Längsschnitt,

Fig. 3 die über die Platte miteinander verbundenen Böden aus Fig. 1 und 2 nach dem Abtrennen der übrigen Wandteile oder Wandungsbereiche der Gefäßchen,

Fig. 4 die über die Platte miteinander verbundenen Böden aus Fig. 3 zwischen einer mit Noppen versehenen und als Widerlager dienenden Unterlage und einem, Lochungen oder Vertiefungen aufweisenden preßstempel,

Fig.5 die Gefäßchen-Böden aus Fig. 3 nach dem Niederdrücken ihrer aufwärtsgerichteten Wandungsbereiche,

Fig. 6 eine Mikrotiterplatte, deren Gefäßchen-Böden mit den Noppen einer plattenförmigen Unterlage verklebt oder verschweißt sind und

Fig. 7 eine Mikrotiterplatte in einem Längsschnitt, deren Gefäßchen-Böden am Überfangsbereich zwischen dem abzutrennenden Bodenbereich und dem verbleibenden Wandungsbereich der Gefäßchen über eine Verbindungsfolie miteinander verbunden sind, wobei die Verbindungsfolie für die Gefäßchen-Böden mit diesen vorgefertigt verbunden ist.

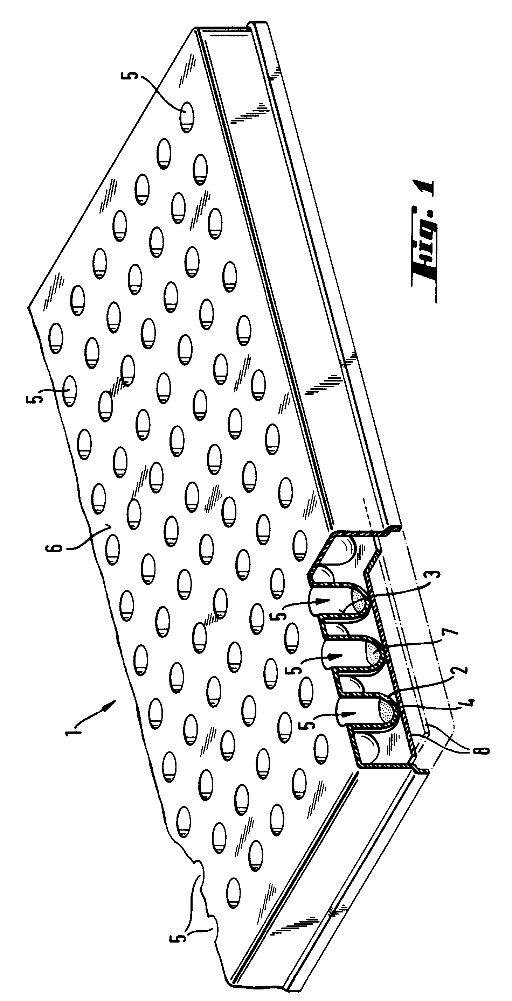

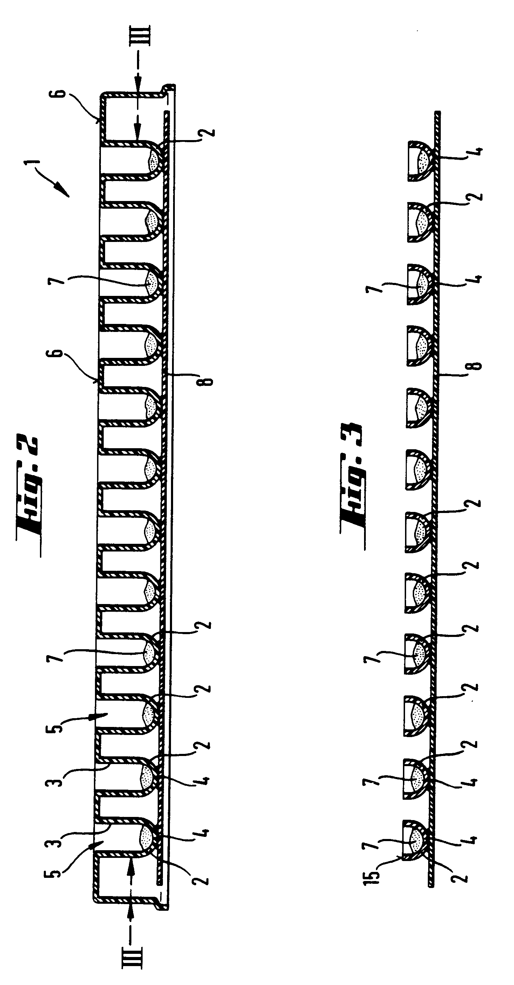

Die Figuren 1 und 2 zeigen in einem Ausschnitt eine Mikrotiterplatte 1, die eine Vielzahl von in Reihen und Zeilen miteinander verbundenen Gefäßchen 2 hat. Jedes der Gefäßchen 2 weist an einem etwa zylinderförmigen Wandungsbereich 3 einen geschlossenen, etwa halbkreisförmigen und als Gefäßchen-Boden 4 ausgebildeten Endbereich auf. An der gegenüberliegenden, die Öffnung 5 aufweisenden Seite der Gefäßchen 2 sind diese durch die etwa plattenförmige Oberseite 6 der Mikrotiterplatte 1 miteinander verbunden.

Wie aus dem aufgebrochen dargestellten Teilbereich der Mikrotiterplatte 1 in Fig. 1 gut erkennbar ist, ist in jedem der Gefäßchen 2, die ein nur vergleichsweise kleines Volumen haben, am Gefäßchen-Boden 4 eine Probe 7 enthalten. In jeder dieser Proben 7 ist festkörpergebundene, zum Beispiel zellgebundene oder in Form eines Protein-Präzipitats vorliegende Radioaktivität enthalten.

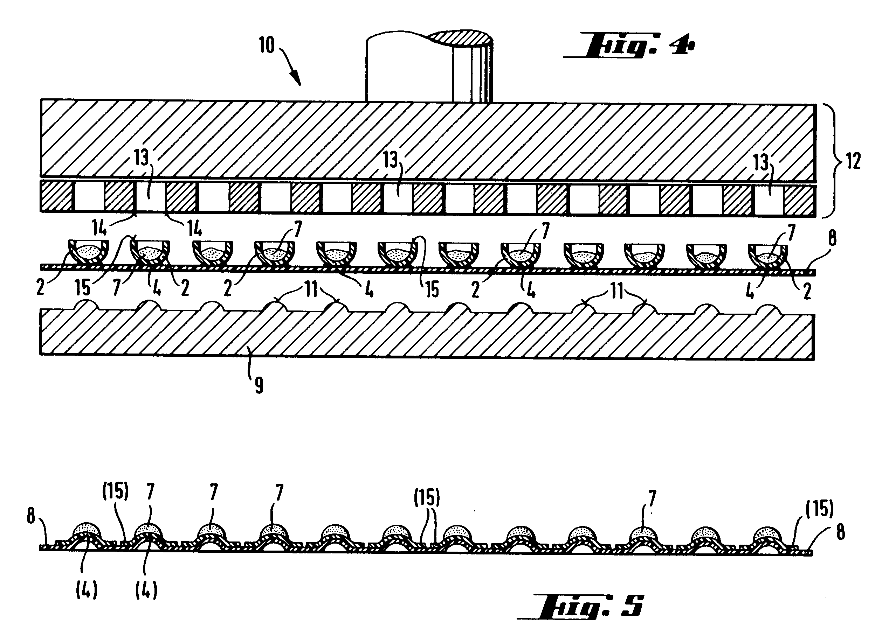

Zur Messung dieser in den Proben 7 enthaltenen Radioaktivität, deren emittierte Elektronenstrahlung nur eine sehr geringe Reichweite hat, sind die Gefäßchen-Böden 4 der Gefäßchen 2 über eine Platte 8 verklebt oder verschweißt, so daß diese von der Mikrotiterplatte 1 und dem entsprechenden Wandungsbereich 3 der Gefäßchen 2, beispielsweise durch einen heißen, sich durch das Kunststoffmaterial der Mikrotiterplatte 1 schneidenden Draht, derart abgetrennt werden können, daß sie ihren Abstand zueinander und ihre ursprüngliche Lage nicht verlieren. Auch nach dem Abtrennen der Gefäßchen-Böden 4 in Schnittebene III-III aus Fig. 2 sind diese - wie Fig. 3 zeigt - in ihrem ursprünglichen Verbund, d.h. in ihrer bisherigen Lage zueinander, handhabbar. Auch nach dem Wegschneiden des oberen Teils der Mikrotiterplatte 1 bleiben die Böden 4 somit in ihrer ursprünglichen Lage relativ zueinander.

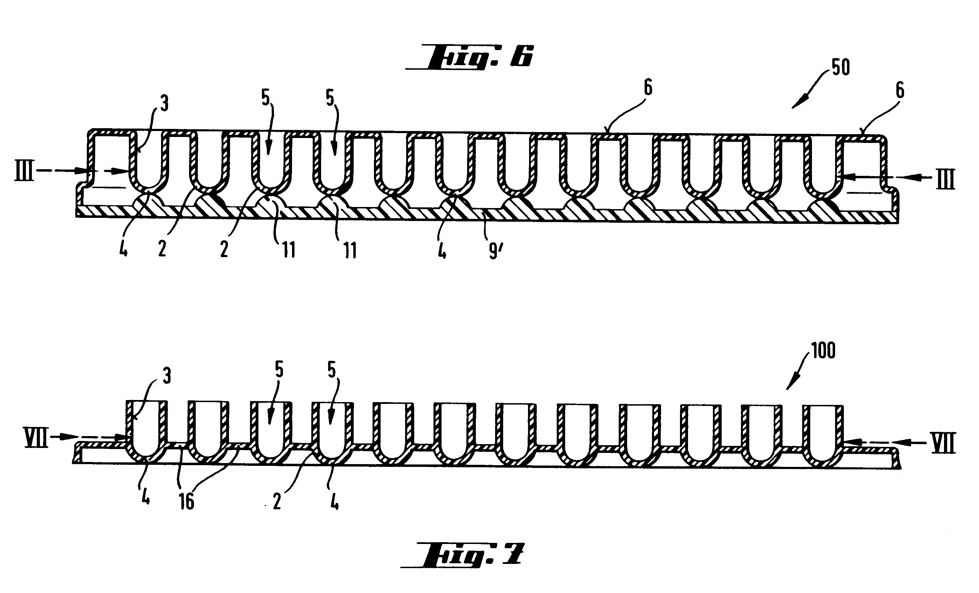

Um bei einer in-situ-Messung der in den Gefäßchen 2 enthaltenen Proben 7 deren Radioaktivität mit ausreichender Zählausbeute und Ortsauflösung messen und um die Proben möglichst nah an die Meßvorrichtung, zum Beispiel ein ortsabhängiges Proportionalzählrohr nach Berthold, bringen zu können, werden die über die Platte 8 miteinander verbundenen, von der übrigen Mikrotiterplatte 1 jedoch abgetrennten Gefäßchen-Böden 4 auf die Unterlage 9 einer als Presse ausgebildeten Vorrichtung 10 angeordnet (vgl. Fig. 4). Die Unterlage 9 ist mit aufwärtsgerichteten Noppen 11 versehen, die im Rasterabstand der Gefäßchen der Mikrotiterplatte 1 und ihrer Gefäßchen-Böden 4 angeordnet sind. Dabei werden die Gefäßchen-Böden 4 mit ihrer Platte 8 so auf der Unterlage 9 angeordnet, daß jeweils ein Gefäßchen-Boden 4 auf einer der Noppen 11 der Unterlage 9 zu liegen kommt.

Die Unterlage 9 dient einem Preßstempel 12 der Vorrichtung 10 als Widerlager, der im Bereich der Noppen 11 der Unterlage 9 Lochungen 13 oder dergleichen Vertiefungen sowie daneben angeordnete, die aufwärtsgerichteten Wandungsbereiche der etwa halbkugelförmigen, in Fig. 4 noch nicht umgestülpten Gefäßchen-Böden 4 beaufschlagende Druckbereiche 14 hat. Durch ein Absenken des Preßstempels 12 der Vorrichtung 10 können die aufgrund der Wölbung der Gefäßchen-Böden 4 aufwärtsweisenden Wandbereiche 15 (vgl. Fig. 4) niedergedrückt und mit Hilfe der Noppen 11 der Unterlage 9 umgestülpt werden. Dabei verhindern die Lochungen 13 des Preßstempels 12 ein unnötiges Zusammenpressen und Komprimieren der von den Gefäßchen-Böden 4 getragenen Proben 7.

Wie Fig. 5 zeigt, wird auf diese Weise jede der radioaktiven Proben 7 praktisch frei zugänglich, so daß die Meßvorrichtung bis auf Berührungsdistanz an die Proben herangebracht werden kann, was in Anbetracht der sehr geringen Reichweite der emittierten Elektronenstrahlung zu einer hohen Empfindlichkeit und Ortsauflösung führt. Dabei sind Maximalentfernungen von beispielsweise 3 mm erreichbar.

Um einer Kontamination des Preßstempels 12 sowie der Vorrichtung 10 vorzugbeugen, oder wenn die radioaktive Quelle 7 nicht genügend mit dem jeweiligen Gefäßchen-Boden 4 verhaftet ist, können die geschnittenen Gefäßchen-Böden 4 vor dem Preßvorgang in der Vorrichtung 10 auch mit einer dünnen Folie aus beispielsweise gestrecktem Polyäthylen überdeckt und die darin befindlichen, überdeckten Proben nacheinander, in Gruppen oder gleichzeitig im gesamten Raster der Mikrotiterplatte 1, gemessen werden. Dabei können die von den Böden 4 der Gefäßchen 2 getragenen Proben in Linien, insbesondere reihen- oder zeilenweise, gemessen werden, da ja der ursprüngliche Abstand sowie die bisherige Lage der Böden 4 mit Hilfe der Platte 8 beibehalten wird.

Vorteilhaft kann es sein, wenn die Gefäßchen-Böden 4 an ihren aufwärtsweisenden Wandteilen 15 bis zum Verformen erwärmt und niedergedrückt werden; zweckmäßigerweise ist dazu der Preßstempel 12 mit einer - hier nicht weiter dargestellten - Heizeinrichtung versehen.

In Fig. 6 ist in einem Längsschnitt eine Mikrotiterplatte 50 dargestellt, bei der die mit den aufwärtsgerichteten Noppen versehene Unterlage 9' als Platte, Folie oder dergleichen ausgebildet ist, die gleichzeitig auch zum Verbinden der Gefäßchen-Böden 4 nach dem Abtrennen von der Mikrotiterplatte 10 dient und dazu mit ihren Noppen 11 an den Unterseiten der Gefäßchen-Böden 4 fixierbar, insbesondere verklebbar oder verschweißbar ist. Die Noppen 11 der Unterlage 9′ dienen bei der Umstülp-Pressung als Preßformen, um die in den Gefäßchen-Böden 4 enthaltenen Proben freilegen zu können. Die Noppen 11 sind bei der Unterlage 9′ als etwa linsenförmige Verdickungen ausgebildet. Die mit der Unterlage 9′ verklebte, verschweißte oder dergleichen verbundene Mikrotiterplatte 10 weist eine größere Steifigkeit auf, so daß sie auch ohne zusätzliche Hilfsmittel Robotergängig ist.

Bei Verwendung der in Fig. 6 dargestellten Mikrotiterplatte 50 kann bei der Preßvorrichtung auf eine weitere, ebenfalls Noppen aufweisende Unterlage verzichtet werden und stattdessen der wie in Fig. 4 ausgebildete Preßstempel mit einem gleichmäßigen, planen Widerlager zusammenwirken.

In Fig. 7 ist eine Mikrotiterplatte 100 in einem Längsschnitt dargestellt, deren Gefäßchen 2 nicht im Bereich ihrer Öffnung 5, sondern vielmehr über eine Verbindungsfolie 16 am Übergang zwischen den abzutrennenden Gefäßchen-Böden 4 und den verbleibenden Wandungsbereichen 3 der Gefäßchen 2 miteinander verbunden sind.

Diese Verbindungsfolie 16, die mit den Gefäßchen-Böden 4 bereits vorgefertigt verbunden ist, ist unterhalb der Trennebene VII-VII angeordnet, so daß auch nach dem Abtrennen der übrigen Wandungsbereiche 3 die Gefäßchen-Böden 4 diese mit ihrem bisherigen Abstand und in der ursprünglichen Lage miteinander verbunden sind.

Nach dem Abtrennen können auch die miteinander verbundenen Gefäßchen-Böden 4 der Mikrotiterplatte 100 umgestülpt werden, um die Meßvorrichtung bis auf Berührungsdistanz an die von den Böden getragenen - hier nicht weiter dargestellten Proben heranführen zu können.

Dabei ist es zweckmäßig, wenn der Überstand der aufwärts gerichteten Noppen des - ähnlich wie in Fig. 4 ausgebildeten-Widerlagers der Presse dem Überstand der zunächst konkaven Böden 4 unterhalb der Verbindungsfolie 16 entspricht, um die Böden 4 möglicht gut und vollständig umstülpen zu können.

Ein Verfahren und eine Vorrichtung zur Messung der Radioaktivität von Proben, die in den Gefässchen einer Mikrotiterplatte angeordnet sind und in denen die Radioaktivität festkörpergebunden, z.B. zellgebunden ist oder in Form eines Protein-Präzipitats vorliegt, wobei in Flüssigkeiten suspendierte, gelöste oder gemischte Proben zunächst von den Flüssigkeiten getrennt werden, und ihr Flüssigkeitsüberstand abgesaugt wird, ist dadurch gekennzeichnet, dass die Böden 4 der Gefässchen der Mikrotiterplatte miteinander verbunden und dann von der Mikrotiterplatte oder den Gefässchen-Wandungen derart abgetrennt werden, dass sie verbunden bleiben, und dass anschliessend die von ihnen getragenen Proben nacheinander, in Gruppen oder gleichzeitig im gesamten Raster, gemessen werden. Somit können die Gefäßchen-Böden 4 auch nach dem Abtrennen von der übrigen Mikrotiterplatte in ihrer ursprünglichen Lage und Anordnung gehandhabt und zur Radioaktivitäts-Messung vorbereitet werden, wobei die von der Mikrotiterplatte abgetrennten Böden 4 und die darauf befindlichen Proben auch nahe, bis zur Berührungsdistanz, an die Meßverrichtung herangebracht werden können. Dadurch ist einen hohe Empfindlichkeit und Ortsauflösung auch bei solchen Proben möglich, deren emittierte Elektronenstrahlung nur einen sehr geringe Reichweite hat.

Durch die Verbindung der Gefäßchen-Böden vor dem Abtrennen von der übrigen Mikrotiterplatte kann deren ursprüngliche Lage zueinander beibehalten werden; dadurch gestaltet sich die Organisation der vielen Proben beim Preß- und Meßvorgang wesentlich einfacher und auch ein irrtümliches Vertauschen der Proben einzelner Gefäßchen-Böden während der Messung der Radioaktivität ist nicht möglich.

**Patentansprüche**

1. Verfahren zur Messung der Radioaktivität von Proben, die in den Gefäßchen einer Mikrotiterplatte angeordnet sind und in denen die Radioaktivität festkörpergebunden, zum Beispiel zellgebunden ist oder in Form eines Protein-Präzipitats vorliegt, wobei in Flüssigkeiten suspendierte, gelöste oder gemischte Proben zunächst von den Flüssigkeiten getrennt werden, und ihr Flüssigkeitsüberstand abgesaugt wird, dadurch gekennzeichnet, dass die Böden (4) der Gefässchen (2) der Mikrotiterplatte (1, 50, 100) miteinander verbunden und dann von der Mikrotiterplatte oder den Gefässchen-Wandungen derart abgetrennt werden, dass sie verbunden bleiben, und dass anschliessend die von ihnen getragenen Proben (7) nacheinander, in Gruppen oder gleichzeitig im gesamten Raster, gemessen werden.

2. Verfahren nach Anspruch 1, dadurch gekennzeichnet, daß die miteinander verbundenen Gefäßchen-Böden (4) der Mikrotiterplatte (1, 50, 100) nach dem Abtrennen derart verformt werden, daß an ihnen aufgrund ihrer Wölbung oder seitlichen Begrenzung aufwärts weisende Wandteile (15) od. dgl. Bereiche umgestülpt und-/oder niedergedrückt werden.

3. Verfahren nach Anspruch 1 oder 2, dadurch gekennzeichnet, daß die Gefäßchen-Böden (4) an ihren aufwärtsweisenden Wandteilen (15) od. dgl. Bereichen bis zum Verformen erwärmt und gegebenenfalls niedergedrückt werden.

4. Verfahren nach einem oder mehreren der Ansprüche 1 bis 3, mit einer Mikrotiterplatte, deren Gefäßchen reihen- und/oder zeilenweise zueinander angeordnet sind, dadurch gekennzeichnet, daß die von den Böden(4) der Gefäßchen (2) getragenen Proben (7) in Linien, insbesondere reihen- oder zeilenweise gemessen werden.

5. Verfahren nach einem oder mehreren der Ansprüche 1 bis 4, dadurch gekennzeichnet, daß die Öffnungen der miteinander verbundenen, von der übrigen Mikrotiterplatte (1, 50, 100) abgetrennten Gefäßchen-Böden (4) vor dem Preß- und dem Meßvorgang mit einer dünnen Folie aus beispielsweise gestrecktem Polyäthylen überdeckt werden.

6. Vorrichtung zur Durchführung des Verfahrens nach einem oder mehreren der Ansprüche 1 bis 5, dadurch gekennzeichnet, daß die Vorrichtung eine mit aufwärtsgerichteten Noppen (11) versehene Unterlage (9, 9′) für die Gefäßchen-Böden (4) aufweist, wobei die Noppen (11) im Rasterabstand der Gefäßchen (2) einer Mikrotiterplatte (1, 50, 100) und ihrer Gefäßchen-Böden (4) angeordnet sind, und daß ein Preßstempel (12) vorgesehen ist, der im Bereich der Noppen (11) der Unterlage (9, 9′) Einbuchtungen, Ausnehmungen, Lochungen (13) od. dgl. Vertiefungen und daneben die aufwärts gerichteten Ränder der noch nicht umgestülpen Gefäßchen-Böden (4) beaufschlagende Ringbereiche oder Druckbereiche (14) hat.

7. Vorrichtung nach Anspruch 6, dadurch gekennzeichnet, daß die mit den aufwärtsgerichteten Noppen (11) versehene Unterlage (9′) als Platte, Folie od.dgl. ausgebildet ist und zum Verbinden der Gefäßchen-Böden (4) vor dem Abtrennen der Böden (4) dient und mit den Noppen (11) an den Unterseiten der Böden (4) fixierbar, insbesondere verklebbar oder verschweißbar ist.

8. Vorrichtung nach Anspruch 6 oder 7, dadurch gekennzeichnet, daß zum Verbinden der Böden (4) der Gefäßchen (2) einer Mikrotiterplatte (1, 100) eine durchgehend glatte, flexible Folie (16) oder Platte (8) dient und die mit Noppen (11) versehene Unterlage (9) als separates Widerlager für den Preßstempel (12) ausgebildet ist.

9. Vorrichtung nach einem oder mehreren der Ansprüche 6 bis 8, dadurch gekennzeichnet, daß die Verbindungsfolie (16) für die Gefäßchen-Böden (4) am Übergang zwischen dem abzutrennenden Bodenbereich und dem verbleibenden Wandungsbereich der Gefäßchen (2) gegebenenfalls mit etwas Abstand bodenseitig unterhalb der Trennstelle, angeordnet ist, und daß der Überstand der zunächst konkaven Böden unterhalb dieser Verbindungsfolie etwa dem Überstand der aufwärts gerichteten Noppen (11) des Widerlagers der Presse entspricht.

10. Vorrichtung nach einem oder mehreren der Ansprüche 6 bis 9, dadurch gekennzeichnet, daß die Verbindungsfolie oder -platte (16, 8) für die Gefäßchen-Böden (4) mit diesen vorgefertigt verbunden ist.

11. Vorrichtung nach einem oder mehreren der Ansprüche 6 bis 10, dadurch gekennzeichnet, daß die Verbindungsfolie oder -platte (8) an die Unterseite der Gefäßchen-Böden aufgeschmolzen ist.

12. Vorrichtung nach einem oder mehreren der Ansprüche 6 bis 11, dadurch gekennzeichnet, daß die Öffnungen der miteinander verbundenen, von der übrigen Mikrotiterplatte (1, 50, 100) abgetrennten Gefäßchen-Böden (4) vor dem Preßvorgang und/oder während des Meßvorganges von einer dünnen Folie aus beispielsweise gestrecktem Polyäthylen überdeckt sind.

## Claims

1. A method for measuring the radioactivity of samples that are arranged in the wells of a microtitre plate and in which the radioactivity is solid-bound, for example cell-bound, or is in the form of a protein precipitate, wherein samples suspended, dissolved or mixed in liquids are first separated from the liquids and then their liquid supernatant is removed by suction, which method comprises connecting the bases (4) of the wells (2) of the microtitre plate (1, 50, 100) to one another and then separating them from the microtitre plate or the well walls in such a manner that they remain connected, and subsequently measuring the samples (7) they carry in succession, in groups or simultaneously over the entire grid.

2. A method according to claim 1, which comprises deforming the interconnected well bases (4) of the microtitre plate (1, 50, 100), after they have been detached, in such a manner that wall portions (15), or suchlike regions, which are arranged thereon and are directed upwards by reason of the curvature or lateral limitation of the well bases are turned inside out and/or pressed down.

3. A method according to claim 1 or 2, which comprises heating the upwardly directed wall portions (15) or suchlike regions of the well bases (4) until deformation occurs and, if necessary, pressing them down.

4. A method according to one or more of claims 1 to 3, with a microtitre plate the wells of which are arranged in rows and/or columns with respect to one another, which comprises measuring the samples (7) carried by the bases (4) of the wells (2) in lines, especially in rows or columns.

5. A method according to one or more of claims 1 to 4, which comprises covering the openings of the interconnected well bases (4), which have been separated from the rest of the microtitre plate (1, 50, 100), with a thin film of, for example, stretched polyethylene, before the pressing and measuring operations.

6. An apparatus for carrying out the method according to one or more of claims 1 to 5, which apparatus has a support (9, 9′) for the well bases (4) which is provided with upwardly directed nubs (11) arranged with the same grid spacing as the wells (2) of a microtitre plate (1, 50, 100) and their well bases (4), and wherein a press stamp (12) is provided which has, in the region of the nubs (11) of the support (9, 9′), indentations, recesses, perforations (13) or suchlike depressions and, alongside them, annular areas or pressure areas (14) that act on the upwardly directed edges of the well bases (4) which have not yet been turned inside out.

7. An apparatus according to claim 6, in which the support (9′) provided with the upwardly directed nubs (11) is in the form of a plate, film or the like and serves to connect the well bases (4) before the bases (4) are detached, and can be fixed, especially adhesively bonded or welded, by its nubs (11) to the undersides of the bases (4).

8. An apparatus according to claim 6 or 7, in which a continuously smooth, flexible film (16) or plate (8) serves to connect the bases (4) of the wells (2) of a microtitre plate (1, 100), and the support (9) provided with nubs (11) is in the form of a separate counter-stamp for the press stamp (12).

9. An apparatus according to one or more of claims 6 to 8, in which the connecting film (16) for the well bases (4) is arranged at the transition zone between the base region to be separated and the remaining wall region of the wells (2), optionally at a slight distance therefrom on the side towards the base and below the separation position, and the length to which the initially concave bases project below that connecting film corresponds approximately to the projecting length of the upwardly directed nubs (11) of the counter-stamp of the press.

10. An apparatus according to one or more of claims 6 to 9, in which the connecting film or plate (16, 8) for the well bases (4) is connected thereto by being prefabricated therewith.

11. An apparatus according to one or more of claims 6 to 10, in which the connecting film or plate (8) is fused onto the underside of the well bases (4).

12. An apparatus according to one or more of claims 6 to 11, in which the openings of the interconnected well bases (4), which have been separated from the rest of the microtitre plate (1, 50, 100), are covered with a thin film of, for example, stretched polyethylene before the pressing operation and/or during the measuring operation.

**Revendications**

1. Procédé de mesure de la radioactivité d'échantillons, qui sont disposés dans les petits logements ou petits récipients ménagés dans une plaque pour microtitrages et dans lesquels la radioactivité est associée ou reliée à des solides, par exemple associée ou reliée à des cellules ou se trouve sous forme d'un précipité protéinique, les échantillons en suspension, en dissolution ou en mélange dans des liquides étant tout d'abord séparés des liquides et la partie surnageante de liquide étant enlevée par aspiration, procédé caractérisé en ce que les fonds (4) des petits récipients (2) ménagés dans la plaque (1, 50, 100) pour microtitrages sont reliés les uns aux autres et sont ensuite séparés de la plaque pour microtitrages ou des parois des petits récipients, de façon que ces fonds demeurent reliés, et en ce qu'on effectue ensuite des mesures réalisées successivement, par groupes ou simultanément dans l'ensemble de la trame ou du réseau, sur les échantillons (7) portés (par les fonds des petits récipients).

2. Procédé selon la revendication 1, caractérisé en ce qu'après leur séparation, les fonds (4), reliés les uns aux autres, des petits récipients ménagés dans la plaque (1, 50, 100) pour microtitrages sont déformés de manière que les parties (;15) de parois ou les zones analogues, dirigées vers le haut en raison de la courbure ou de la délimitation latérale (des fonds) soient soumises à une inversion de courbure et/ou à un refoulement vers le bas.

3. Procédé selon la revendication 1 ou 2, caractérisé en ce que les parties (15) de parois ou zones analogues, dirigées vers le haut, des fonds (4) de petits récipients sont chauffées jusqu'à déformation et éventuellement abaissées par refoulement vers le bas.

4. Procédé selon une ou plusieurs des revendications 1 à 3, appliqué dans le cas d'une plaque pour microtitrages dont les petits logements ou récipients sont disposés en rangées et/ou en lignes les uns par rapport aux autres, procédé caractérisé en ce qu'on effectue en lignes, notamment par rangées ou files ou lignes, des mesures sur des échantillons (7) portés par les fonds (4) des petits récipients (2).

5. Procédé selon une ou plusieurs des revendications 1 à 4, caractérisé en ce que les ouvertures des fonds (4) des petits récipients, reliés les uns aux autres et séparés du reste de la plaque (1, 50, 100) pour microtitrages, sont recouverts d'une mince feuille, par exemple un polyéthylène étiré, avant l'opération de compression et de mesure.

6. Dispositif pour la mise en oeuvre du procédé selon une ou plusieurs des revendications 1 à 5, caractérisé en ce que le dispositif comporte un élément (9, 9'), comportant des saillies (11) dirigées vers le haut, de support des fonds (4) de petits récipients, les saillies (11) étant disposées à une distance, formant pas de réseau, des petits récipients (2) ménagés dans une plaque (1, 50, 100) pour microtitrages et des fonds (4) de ces petits récipients, et en ce que l'on prévoit l'existence d'un plateau (12) de compression qui comporte, dans la zone des saillies (11) de l'élément (9, 9') de support, des dentelures, des évidements, des trous (13) ou des creux ou cavités analogues et, à côté, des zones annulaires ou zones de pression (14) pouvant agir sur les bords, dirigés vers le haut, des fonds (4),de petits récipients n'ayant pas encore fait l'objet d'un refoulement ou d'une inversion de courbure.

7. Dispositif selon la revendication 6, caractérisé en ce que l'élément (9') de support, comportant des saillies (11) dirigées vers le haut, a la forme d'une plaquette, d'une feuille ou d'un objet analogue et sert à relier les fonds (4) des petits récipients avant la séparation des fonds (4),et cet élément peut être fixé, notamment peut être collé ou soudé, aux côtés inférieurs des fonds (4) de petits récipients.

8. Dispositif selon la revendication 6 ou 7, caractérisé en ce qu'une feuille (16) ou une plaquette (8) flexible et entièrement lisse sert à relier les fonds (4) des petits récipients (2) ménagés dans une plaque (1, 100) pour microtitrages et en ce que l'élément (9) de support, comportant des saillies (11), est réalisé sous forme de butées séparées pour le plateau de compression (12).

9. Dispositif selon une ou plusieurs des revendications 6 à 8, caractérisé en ce que la feuille (16) de liaison des fonds (4) des petits récipients est disposée à la transition de passage entre la zone de fond à séparer et la zone de paroi restante des petits récipients (2), éventuellement avec une petite distance du côté du fond au-dessous de la zone de séparation, et en ce que la partie située au-dessus des fonds tout d'abord concaves placés au-dessous de cette feuille de liaison correspond approximativement à la partie située au-dessus des saillies (11), dirigées vers le haut, de la contre-butée.

10. Dispositif selon l'une ou plusieurs des revendications 6 à 9, caractérisé en ce que la feuille ou plaquette (16, 8) de liaison des fonds (4) des petits récipients est reliée à ces fonds sous forme d'un objet préfabriqué.

11. Dispositif selon une ou plusieurs des revendications 6 à 10, caractérisé en ce que la feuille ou plaquette (8) de liaison est fixée par fusion au côté inférieur des fonds (4) de petits récipients.

12. Dispositif selon une ou plusieurs des revendications 6 à 11, caractérisé en ce que les ouvertures des fonds (4) des petits récipients, fonds qui sont reliés les uns aux autres et sont séparés du reste de la plaque (1, 50, 100) pour microtitrages,sont recouverts, avant l'opération de compression et/ou pendant l'opération de mesure, par une feuille mince qui est par exemple constituée par du polyéthylène étiré.

Fig. 1

**Fig. 2**

**Fig. 3**

EP 0 397 600 B1

EP 0 397 600 B1

*Fig. 4*

*Fig. 5*

EP 0 397 600 B1

## Fig. 6

50

3    5    5    6    6

III                                                                III

4  2   2  11  11      4    9'

## Fig. 7

100

3    5    5

VII                                                                VII

4  16    2    4